# EUROPEAN PATENT APPLICATION

(11) **EP 0 835 841 A1**
(43) Date of publication of application: **15.04.1998**
(21) Application number: 97306329.0
(22) Date of filing: 20.08.1997
(51) Int. Cl.: B67D 1/08, G01G 17/04, G06F 17/60

(54) **Stock taking accessory and a method of monitoring the dispensing of beverages**

(30) Priority: 20.08.1996 ZA 9607080
(71) Applicant: Stock Master International (Proprietary) Limited, Lynnwood, Pretoria 0081 (ZA)
(72) Inventor: Schreuder, Daniel Jacobus, White Drive River, 1240 (ZA)
(74) Representative: Spall, Christopher John

(57) **Abstract**

A stocktaking accessory 10 includes weighing means 12 for weighing a partially full receptacle. The accessory 10 further includes processor means responsive to the weighing means 12 and operable to calculate the quantity of a beverage remaining in the receptacle. The accessory 10 further includes a data storage means configured to receive from and store data processed by the processor. The stored data can be printed out or downloaded onto a personal computer to permit data collected during a stock take to be analysed.

## Description

THIS INVENTION relates to the dispensing of substances. More particularly, it relates to a stocktaking accessory and to a method of monitoring the dispensing of beverages.

Beverages, such as alcoholic beverages, are typically dispensed in a preselected quantity, typically a tot or dram of the beverage. Usually the preselected quantity is about 25 ml which is dispensed via an optic. It is often necessary, e.g. for stocktaking purposes, to ascertain the quantity of the beverage which has been dispensed from, or the quantity remaining in, a receptacle containing the beverage.

In the past this was achieved by the person taking stock, typically a barman, attempting to estimate the quantity of beverage remaining in a receptacle and manually entering his estimate in a record system, e.g. a stock book. Disadvantages with this system include that it is time consuming. In addition, depending on the experience of the person taking stock, it is fairly imprecise. This in turn makes it difficult to exercise control over the stock which can lead to losses owing to pilfering.

It is an object of this invention to provide means which the Inventor believes will at least alleviate this problem.

For the purposes of this specification, the term "full receptacle weight" is intended to mean the combined weight of the receptacle and beverage contained therein when filled with the beverage, e.g. a sealed bottle of an alcoholic beverage, The term "nett receptacle weight" is intended to mean the weight of the receptacle when it does not contain any beverage, the term "partial receptacle weight" is intended to mean the combined weight of the receptacle and beverage contained therein when partially filled with the beverage, the term "full beverage weight" is intended to mean the weight of the beverage only contained in a full receptacle, and the term "partial beverage weight" is intended to mean the weight of the beverage only contained in the receptacle when the receptacle is partially full.

According to one aspect of the invention there is provided a stocktaking accessory for use, particularly though not necessarily exclusively, in taking stock at a location, such as a bar, where beverages are dispensed from receptacles in units of a preselected quantity, the accessory including
weighing means for weighing a partially full receptacle; and
processor means responsive to the weighing means and operable to calculate the quantity of the beverage remaining in the receptacle.

The stocktaking accessory may include data storage means configured to receive from and store data processed by the processor means.

The stocktaking accessory may include display means connected to and responsive to the processor means and operable to display data processed by the processor means.

The stocktaking accessory is preferably portable and includes a power supply so that it is self-contained. The stocktaking accessory may include a housing within which components of the accessory are housed. The housing may include an integral handle. Hence, in use, the accessory can be moved around a bar to facilitate the taking of stock. In addition it can be used to take stock at a number of different locations, e.g. different bars within a hotel. The power supply may include a battery, typically a rechargeable battery. The accessory may include a built-in battery charger. Typically, the accessory is energizable from either the battery or a mains power supply, the battery charger being configured to recharge the battery automatically when the apparatus is being energized from a mains power supply.

The data storage means may be configured to store data associated with at least one receptacle. Typically, the data storage means includes a plurality of storage locations for storing data on at least some of the full receptacle weight, the nett receptacle weight, the full beverage weight, the preselected quantity, the number of dispensable units, the unit price, and/or the unit weight of each preselected quantity.

The storage means may be in the form of volatile and/or non-volatile memory, e.g. RAM, EPROM, or the like. When storage means includes non-volatile memory in the form of RAM, the apparatus may include a back-up battery supply, preferably a rechargeable back-up battery supply.

The apparatus may include input means, e.g. a keypad, for entering data into the processor means and/or the data storage means.

Typically, the processor means is operable to calculate the unit weight of the preselected quantity of the beverage by subtracting the nett receptacle weight from the full receptacle weight and then dividing the result by the total number of dispensable units of the beverage in a full receptacle.

Preferably, the processor means is operable to calculate the number of remaining dispensable units by dividing the weight of the beverage remaining in the receptacle by the unit weight of the beverage. The processor means may then be operable to store the number of remaining dispensable units in the data storage means e.g. for future retrieval.

It is to be appreciated that the quantity of beverage remaining in the receptacle can be expressed and stored in the data storage means in any suitable form.

Hence, the processor means may be operable to multiply the number of remaining dispensable units by a unit price of the beverage to establish a value of the beverage remaining in the receptacle. Accordingly, the storage means may have a value storage location for storing a unit price of the beverage, e.g. a cost price, a selling price, or the like.

Typically, the processor means is a micro-controller, e.g. a PCB80C552, or the like. The weighing means is typically a loadcell, e.g. a 10 kg high precision loadcell.

The apparatus may include an analogue-to-digital converter (A/D) converter) connected to, and responsive to, the loadcell and operable to generate a digital output, of the weight of the receptacle when located on the loadcell, which is fed in use into the processor means. In certain embodiments of the invention, the A/D converter forms part of the processor means, e.g. when the processor means is a PCB80C552.

The apparatus may include a serial and/or parallel data communication interface. Typically, the interface is connected or connectable to a printer to print out data after the apparatus is used in a stocktaking exercise. In other embodiments, the interface is connected or connectable to a personal computer thereby permitting details of the stock to be downloaded when desired.

According to another aspect of the invention there is provided a method of monitoring the dispensing of beverages dispensed from receptacles which includes the steps of
weighing a partially full receptacle; and
feeding a signal from the weighing means to processor means in which the quantity of the beverage remaining in the receptacle is calculated.

Calculating the quantity of beverage remaining in the receptacle may include comparing the partial receptacle weight with a reference weight.

It is to be appreciated that the quantity of beverage remaining in the receptacle is directly proportional to the quantity of beverage dispensed from the receptacle and vice versa. Accordingly, in the context of this specification, the phrase "monitoring the dispensing of beverages" is to be understood to include monitoring of the quantity of undispensed beverage remaining in a receptacle. Further, the monitoring may be continuous. Preferably, however, the monitoring is periodic, typically as a stocktaking exercise.

The reference weight may be the weight of an empty receptacle, the method including the prior step of weighing an empty receptacle to establish a nett receptacle weight and storing the nett receptacle weight in a data storage means, comparing the partial receptacle weight with the reference weight including subtracting the nett receptacle weight stored in the data storage means from the partial receptacle weight to calculate the partial beverage weight.

Typically, the quantity of the beverage dispensed includes multiples of a preselected quantity such as a tot, a dram, or the like, of an alcoholic beverage.

The method may include the prior step of weighing the receptacle when filled with the beverage, e.g. a full sealed bottle of an alcoholic beverage, to obtain a full receptacle weight and subtracting the nett receptacle weight therefrom to obtain a full beverage weight. Accordingly, the method may include subtracting the partial beverage weight from the full beverage weight thereby to obtain a weight of the beverage that has been dispensed or a "dispensed beverage weight".

The method may include dividing the full beverage weight by the preselected quantity thereby to obtain the number of dispensable units which may be dispensed from the receptacle. Typically, the receptacle is a bottle of alcoholic spirits, e.g. rum, vodka, whisky, brandy, or the like which contains about 750 ml of the alcoholic beverage. Accordingly, when the preselected quantity is a tot of about 25 ml, 30 dispensable units are available for dispensing from each bottle.

The method may include dividing the full beverage weight by the number of dispensable units thereby to obtain a unit weight of each preselected quantity.

Accordingly, when the beverage is dispensed in units of a predetermined quantity, the method may include dividing the partial beverage weight by the unit weight thereby to obtain the number of dispensable units remaining in the receptacle, referred to herein as remaining dispensable units. Still further, the method may include multiplying the number of remaining dispensable units by a unit price, e.g. a selling price, a cost price, or the like, of each unit to obtain a value of the remaining dispensable units.

Typically, the method is carried out for a variety of different alcoholic beverages to permit the taking of stock of alcoholic beverages in a restaurant, bar, or the like.

The method may include automatically storing details of the quantity of beverage remaining in the receptacle in a data storage means for later retrieval.

The method may include, when required, retrieving from the data storage means pre-stored data on the full receptacle weight, the nett receptacle weight, the full beverage weight, the preselected quantity, the number of dispensable units, the unit price, and/or the unit weight of each preselected quantity.

Accordingly, the method may include weighing the receptacle when it includes the beverage to obtain the full receptacle weight and then storing it in the data storage means. Likewise, the method may include weighing the receptacle only to obtain its nett receptacle weight and storing it in the data storage means.

The invention extends to a stocktaking accessory which includes processor means operable to execute the method as hereinbefore described.

The invention is now described, by way of example, with reference to the accompanying diagrammatic drawings.

In the drawings,
Figure 1 shows a pictorial view of stocktaking accessory in accordance with the invention;
Figure 2 shows a schematic block diagram of the accessory of Figure 1;
Figures 3 to 5 show schematic circuit diagrams of various sub-circuits of a power supply unit of the accessory of Figure 1;
Figure 6 shows a schematic circuit diagram of a loadcell interface of the accessory of Figure 1;
Figure 7 shows a schematic circuit diagram of processor circuitry of the accessory of Figure 1;
Figure 8 shows a schematic circuit diagram of a keyboard and a serial interface of the accessory of Figure 1;
Figure 9 shows a flow chart of steps followed by a user when feeding data into the accessory of Figure 1;
Figure 10 shows a flow chart of steps followed by a user during a stocktaking exercise;
Figure 11 shows a pictorial view, similar to Figure 1, of another stocktaking accessory in accordance with the invention;
Figure 12 shows a schematic block diagram of the: accessory of Figure 11;
Figures 13 and 14 show schematic circuit diagrams of various sub-circuits of a power supply unit of the accessory of Figure 11;
Figure 15 shows a schematic circuit diagram of a loadcell interface of the accessory of Figure 11;
Figure 16 shows a schematic circuit diagram of processor circuitry of the accessory of Figure 11;
Figure 17 shows a schematic circuit diagram of various interfaces of the accessory of Figure 11; and
Figure 18 shows a schematic keypad circuit diagram of the accessory of Figure 11.

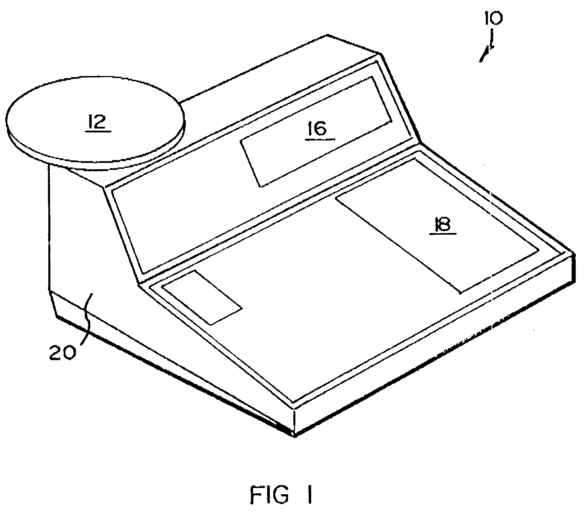

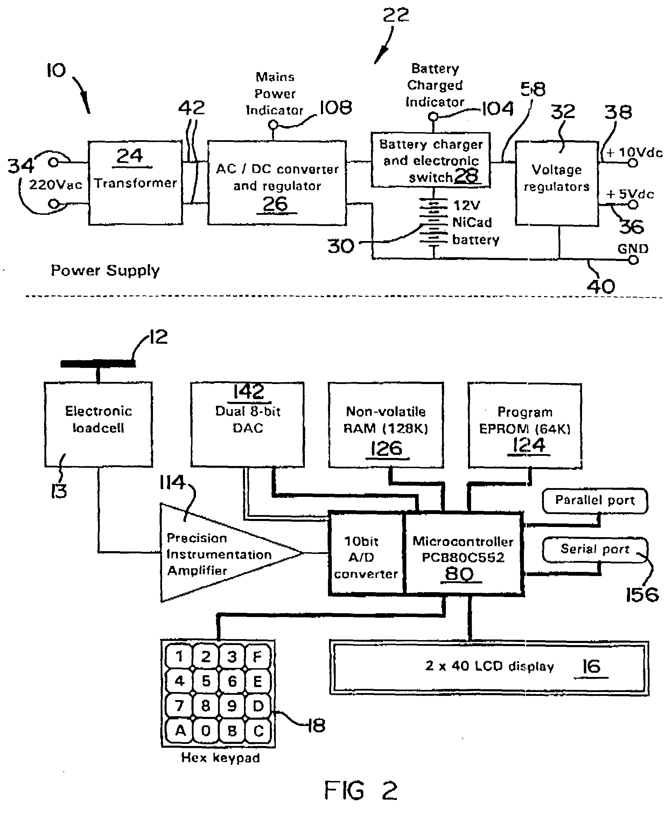

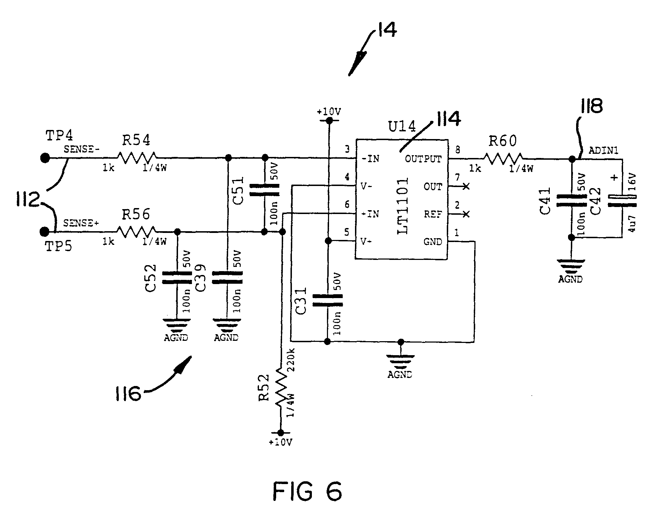

Referring to Figures 1 to 8 of the drawings, reference numeral 10 generally indicates a stocktaking accessory, in accordance with the invention, for monitoring the dispensing of beverages, particularly alcoholic beverages, from a receptacle. The accessory 10 includes weighing means comprising a platform 12, a loadcell 13 (see Figure 2), and a loadcell interface 14 (see Figure 6), a display 16 (see Figure 1), input means in the form of hex keypad 18 (see Figures 1, 2 and 8), and a shaped housing 20 within which are mounted various components of the accessory 10.

The accessory 10 is used in stocktaking to ascertain the quantity of an alcoholic beverage, e.g. rum, vodka, whisky, brandy, or the like remaining in a receptacle such as a bottle. A full bottle typically contains about 750 ml of the alcoholic beverage. The accessory 10 also provides a user with an estimated value of the undispensed beverage remaining in the bottle and other relevant information usually obtained during a stocktaking exercise.

Referring in particular to Figures 2 to 8 of the drawings, the accessory 10 includes a power supply unit 22 (see Figure 2) comprising a transformer 24, rectification circuitry 26, a battery charger 28, a 12 volt rechargeable NiCad battery 30, and voltage regulators 32. The power supply unit 22 is connected via lines 34 to a 220 volt AC supply line and provides regulated 5 volt and 10 volt DC outputs via lines 36 and 38 respectively to various sub-circuits of the accessory 10. A ground line 40 is also connected to the various sub-circuits of the accessory 10.

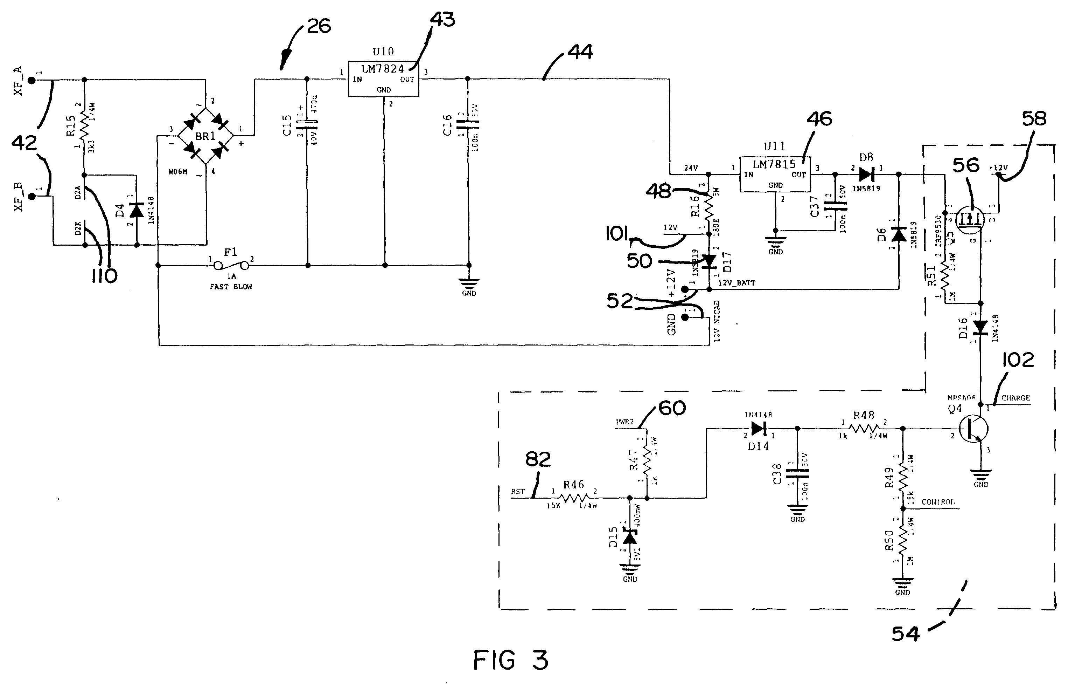

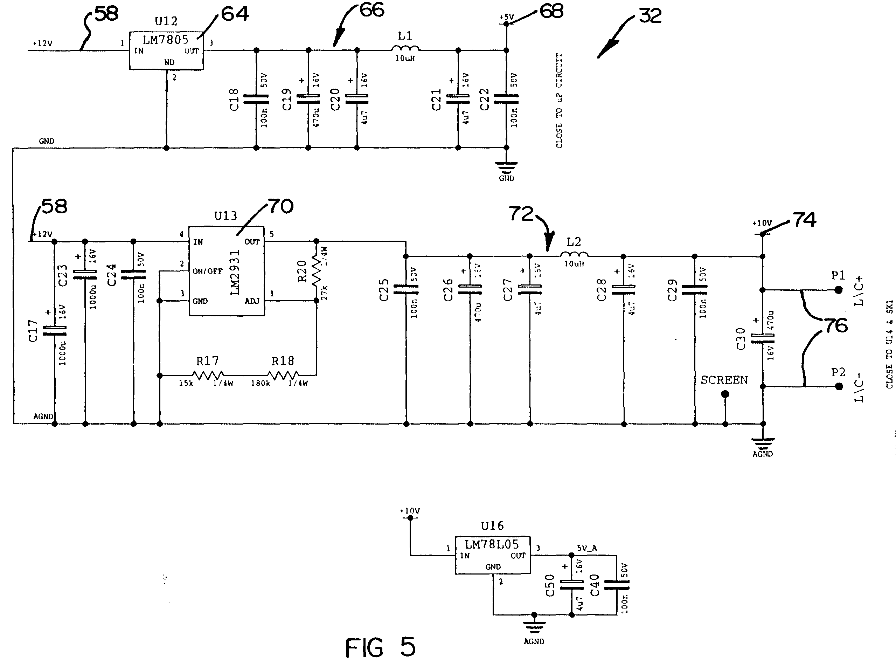

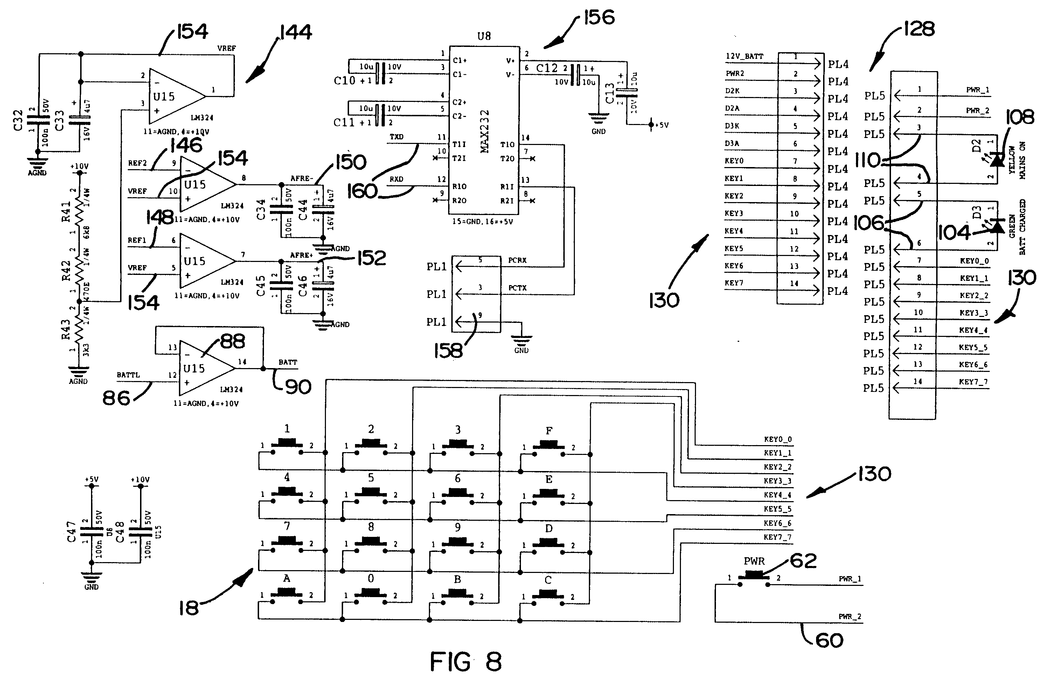

The transformer 24 provides a 24 volt AC output which is fed via lines 42 (see Figures 2 and 3) to the rectification circuitry 26 which includes a 24 volt voltage regulator 43 (see Figure 3). The regulator 43 together with its associated circuitry, provides a regulated 24 volt DC output along a 24 volt supply line 44 which is fed into a 12 volt voltage regulator 46. The 24 volt DC output is also fed via a resistor 48 and a diode 50 into the battery 30 via lines 52 (see Figures 2 and 3). The 24 volt DC is used to charge the battery 30 as will be described in more detail below. An electronic power switch 54 (see Figure 3) is provided to switch power via the HEXFET 56 to a 12 volt positive supply rail 58 which is connected to the voltage regulators 32 (see Figures 2 and 5). The electronic power switch 54 is connected via line 60 to an on-off switch 62 (see Figure 8) of the accessory 10.

A 5 volt voltage regulator 64 (see Figure 5) is connected to the 12 volt supply rail 58 and, via its associated filter circuitry 66, provides a 5 volt regulated output which is fed via a 5 volt supply rail 68 to various components of the accessory 10. A 10 volt voltage regulator 70 is also connected to the 12 volt supply rail 58. A 10 volt regulated output from the regulator 70 is fed via its associated filter circuitry 72 to a 10 volt supply rail 74 which powers various circuitry of the accessory 10. The 10 volt regulated output is also fed via lines 76 to the loadcell 13.

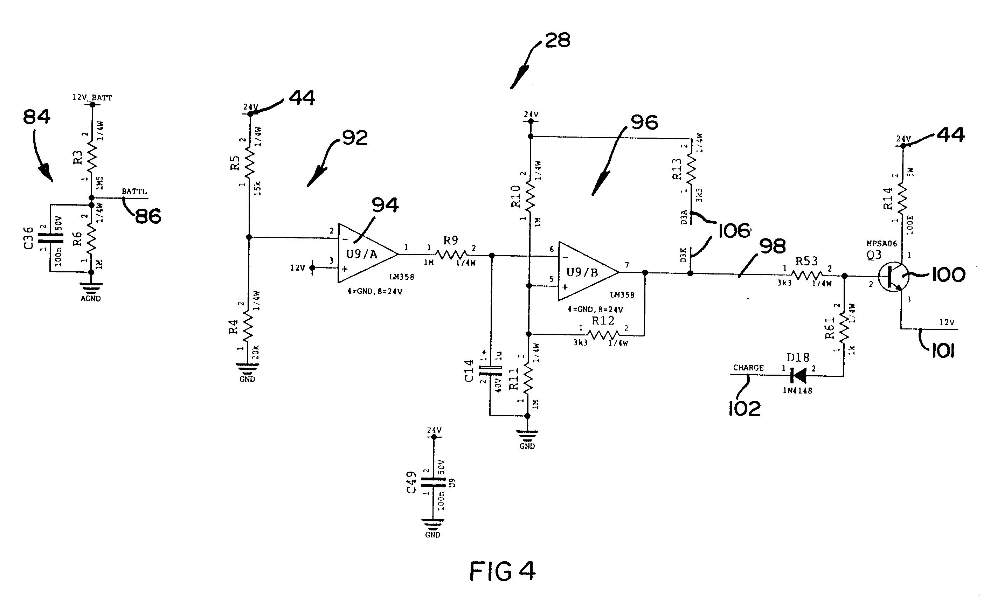

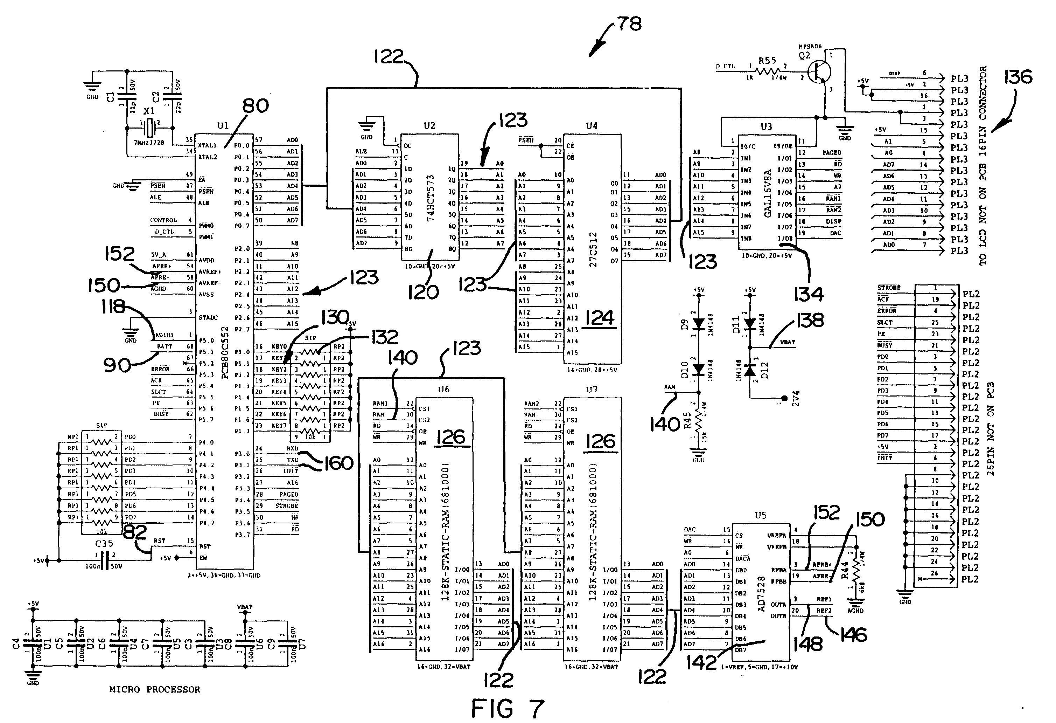

The accessory 10 is controlled by processor circuitry 78 (see Figure 7). The processor circuitry 78 includes a micro-controller 80, typically a PCB80C552, which is connected via line 82 (see Figure 7) to the electronic power switch 54 (see Figure 3) thereby to control switching on and off of the accessory 10. A battery level monitor 84 (see Figure 4), including a potential divider, is connected via line 86 to an op-amp 88 (see Figure 8) which operates in a saturation mode. An output of the op-amp 88 is connected via line 90 to the micro-controller 80 (see Figure 7). Accordingly, the micro-controller 80 is operable to switch the accessory 10 off when the charge level of the battery 30 drops below a preset value set by the battery level monitor 84 (see Figure 4).

The battery charger 28 (see Figure 4) includes a potential divider 92 which is connected to the 24 volt supply line 44 and a comparator 94. An output of the comparator 94 is fed into a delay circuit 96 which provides a pulsed output along line 98 dependent upon the state of charge of the battery 30. The pulsed output along line 98 intermittently switches a transistor 100 which, via line 101, connects the diode 50 (see Figure 3) directly to the 24 volt supply line 44. When the transistor 100 is turned on, the battery charger 28 is in a fast charge mode in which the resistor 48 is shorted out. However, when the transistor 100 is switched off, the battery charger 28 is in a trickle charge mode, charging the battery 30 via the resistor 48. When the battery charger 28 is in the fast charge mode, a signal is fed via line 102 (see Figure 4) to the electronic power switch 54 (see Figure 3) thereby to switch off the accessory 10. A green LED 104 (see Figures 2 and 8) is connected via lines 106 to the delay circuit 96 (see Figure 4) to indicate that the battery 30 is being charged. A yellow LED 108 (see Figures 2 and 8) is connected via lines 110 to the rectification circuitry 26 (see Figure 3) to indicate when the accessory 10 is switched on.

The loadcell 13 (see Figure 2) of the accessory 10 is connected to the loadcell interface 14 via lines 112 (see Figure 6). An output from the loadcell 13 is fed into a precision instrumentation amplifier 114 via its associated circuitry 116. A voltage, which is proportional to the weight of a bottle and the beverage contained therein located on the platform 12, is amplified by the amplifier 114 and fed via line 118 into an analogue-to-digital converter (A/D converter) provided within the micro-controller 80 of the processor circuitry 78 (see Figure 7).

The processor circuitry 78 includes a latch chip 120 which is connected to an address/data bus 122 of the micro-controller 80, an EPROM chip 124, which is also connected to the address/data bus 122, and two static RAM chips 126, also connected to the address/data bus 122. The EPROM chip 124, RAM chips 126, and latch chip 120 are also connected to an address bus 123.

The keypad 18 (see Figure 8) is a push-button hex keypad and is connected via a connector 128 and lines 130 to the micro-controller 80 and pull-up resistors 132 (see Figure 7). The processor circuitry 78 includes an enabling device 134, typically a GAL16V8A which is connected to the address bus 123 and is programmed selectively to enable the static RAM chips 126 and the EPROM chip 124.

The display 16 is connected via lines 136 to the processor circuitry 78. The display 16 (see Figures 2 and 7) is an LCD display which is operable to display information under control of the processor circuitry 78.

The RAM chips 126 define storage locations in which selected data (described in more detail below) on a specific alcoholic beverage or stock item are stored and are provided with a continuous supply of current, via a supply line 138 (see Figure 7), so that their memory is non-volatile. Further, the RAM chips 126 are disabled via line 140 before the micro-controller 80 is switched off.

The micro-controller 80 includes a 10 bit A/D converter. This 10 bit A/D converter is modified to form a 12 bit A/D converter by means of a dual 8 bit A/D converter 142 (see Figure 7). The A/D converter 142 shifts the reference levels of the A/D converter in the micro-controller 80 thereby providing enhanced resolution. Accordingly, buffers 144 (see Figure 8) are provided to buffer signals fed into the A/D converter 142. The buffers 144 are connected via lines 146, 148, to the A/D converter 142 and via lines 150, 152 to the micro-controller 80. A reference voltage is provided via line 154 to the buffers 144.

A serial communication interface 156 (see Figure 8), typically a MAX232 and associated circuitry, is connected via connector 158 to an accessory such as a personal computer, a printer, or the like. The serial communication interface 156 is connected via lines 160 to the micro-controller 80.

In use, the accessory 10 is used to establish the quantity of an alcoholic beverage remaining in a partially full bottle and hence, if desired, the quantity of beverage which has been dispensed from the bottle. An operator of the accessory 10 creates various locations within the memory of the processor circuitry 78, each location typically corresponding to a particular bar from which alcoholic beverages are dispensed. When carrying out a stocktaking exercise, the particular location is entered into the processor circuitry 78 via the keyboard 18 which then identifies at which bar stocktaking is to take place. Advantageously, data on the various bottles of liquor positioned on a shelf in the bar, are stored in the same sequence in the RAM chips 126 as they are placed on the shelves of the bar to facilitate stocktaking. Further, in a preferred embodiment of the invention, preselected parameters associated with each different type of alcoholic beverage are stored in the EPROM chip 124. The EPROM chip 124 thus has a plurality of storage locations which each store a default receptacle weight, a default nett receptacle weight, a default full beverage weight, a default number of dispensable units, and a default unit weight of each dispensable unit of the alcoholic beverage stored in each bottle. Further, the selling price of each dispensable unit of each particular alcoholic beverage is also stored in the EPROM chip 124 or, in certain circumstances, in the RAM chips 126.

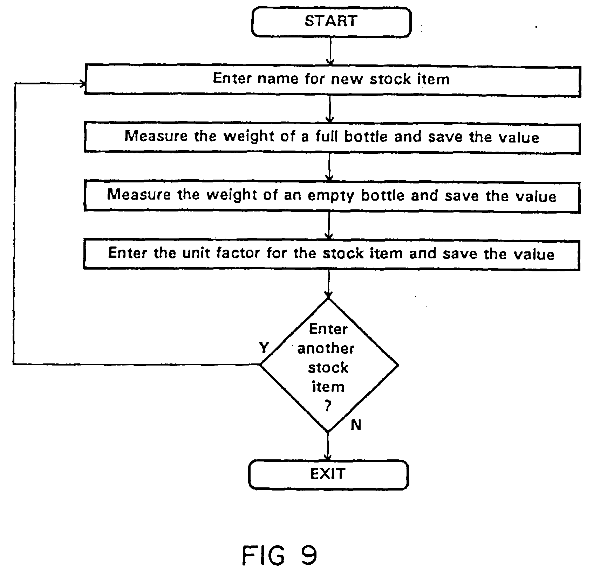

The default values, when stored in the RAM chips 126, may however be changed by an operator via the keypad 18 under control of the processor circuitry 78. For example, when entering data on a new alcoholic beverage or stock item, the operator may first enter the name of the stock item (see Figure 9). Thereafter a full bottle of the alcoholic beverage is positioned on the platform 12. The loadcell 13 then measures the weight of the bottle which is fed into the processor circuitry 78 which, in turn, then stores the full receptacle weight in a storage location defined in the RAM chips 126 and which is associated with the particular alcoholic beverage. The operator then places an empty bottle of the beverage on the platform 12 and, in a similar fashion, the nett receptacle weight of the bottle is stored in a storage location in the RAM chips 126. Finally, the number of dispensable units which may be dispensed from a full bottle of the alcoholic beverage is entered via the keypad 18 and stored in a particular storage location provided in the RAM chips 126. As shown in Figure 9, these steps are repeated for each new stock item that is to be entered into the accessory 10.

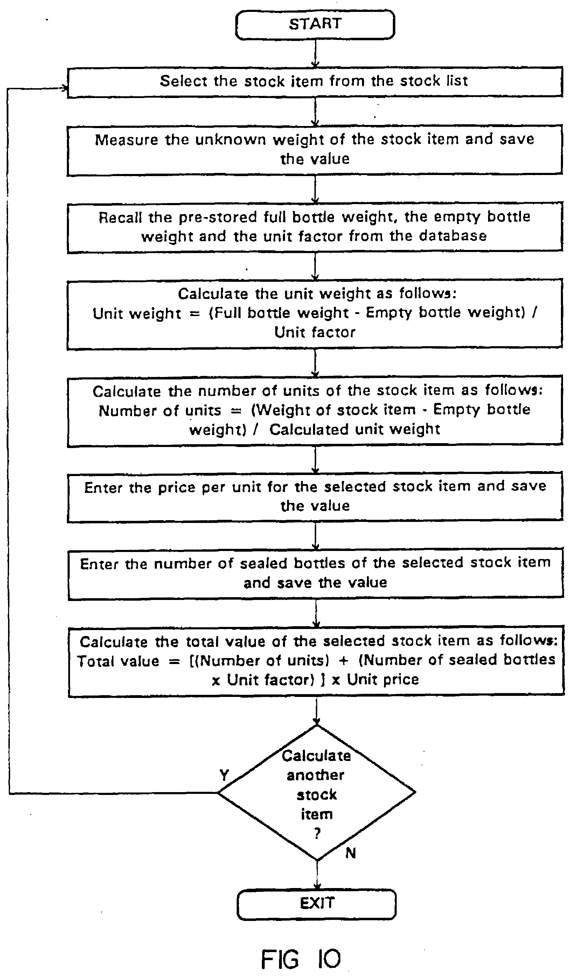

Referring in particular to Figure 10, when an operator wishes to take stock in a particular bar, the particular bar is identified via the keypad 18 and each stock item is sequentially selected and the steps set out in the flow chart in Figure 10 are sequentially carried out. In particular, the particular stock item is selected and details thereof are fed into the accessory 10 via the keypad 18. The stock item, from which a number of units, typically tots, has been dispensed, is then located on the platform 12 and its partial receptacle weight is measured and is fed into the processor circuitry 78. The processor circuitry 78 then recalls the default or pre-stored full receptacle weight, the nett receptacle weight, and the number of dispensable units from a full bottle from the RAM chips 126 and the EPROM chip 124. The micro-controller 80 then calculates the unit weight i.e. the weight of each preselected quantity, typically a tot of the alcoholic beverage, by subtracting the nett receptacle weight from the full receptacle weight and dividing the result by the number of dispensable units in a full bottle of the alcoholic beverage. Thereafter, a number of dispensable units remaining in the bottle is calculated by subtracting the nett receptacle weight from the partial receptacle weight and dividing the result by the unit weight thereby to provide the number of dispensable units remaining in the bottle. The unit price of the particular alcoholic beverage is then either entered via the keypad 18 or retrieved from the EPROM chip 124 or RAM chips 126. Further, a number of sealed bottles of the selected stock item which are located on the bar is then entered into the processor circuitry 78 via the keypad 18. The total value of the selected stock item remaining on the shelf is then calculated as follows:
Total value = [(number of remaining dispensable units) + (number of sealed bottles x number of dispensable units per bottle)] x unit price. The result may be stored in the RAM chips 126 and is displayed on the LCD display 16. As shown in the flow chart in Figure 10, the aforementioned sequence is then repeated for each different stock item until the stock of the entire bar has been taken.

It is to be appreciated that instead of providing a value for a particular stock, the remaining stock can be defined in any other suitable fashion, e.g. number of days of stock, by entering suitable base line data, e.g. average daily consumption of that particular stock item.

The stock details for the bar is, as mentioned above, stored on the RAM chips 126 and can be printed out or downloaded into a personal computer permitting the stock figures to be analysed and for example compared with other records e.g. those produced by cash registers.

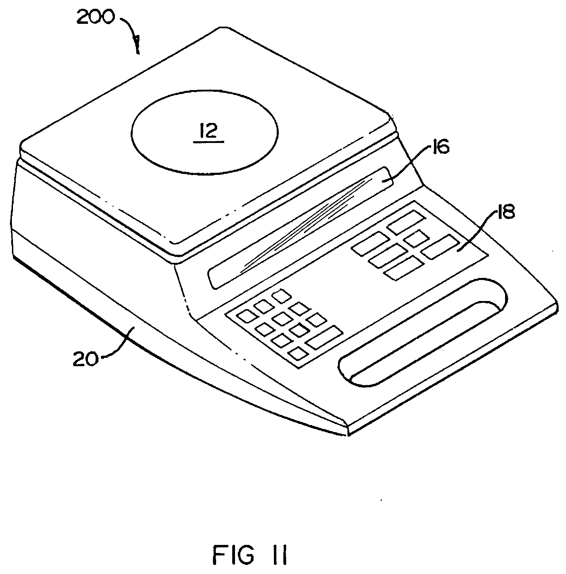

Reference is now made to Figures 11 to 18 of the drawings, in which reference numeral 200 refers generally to another stocktaking accessory in accordance with the invention and, unless otherwise indicated, the same reference numerals used above are used to designate the same or similar components.

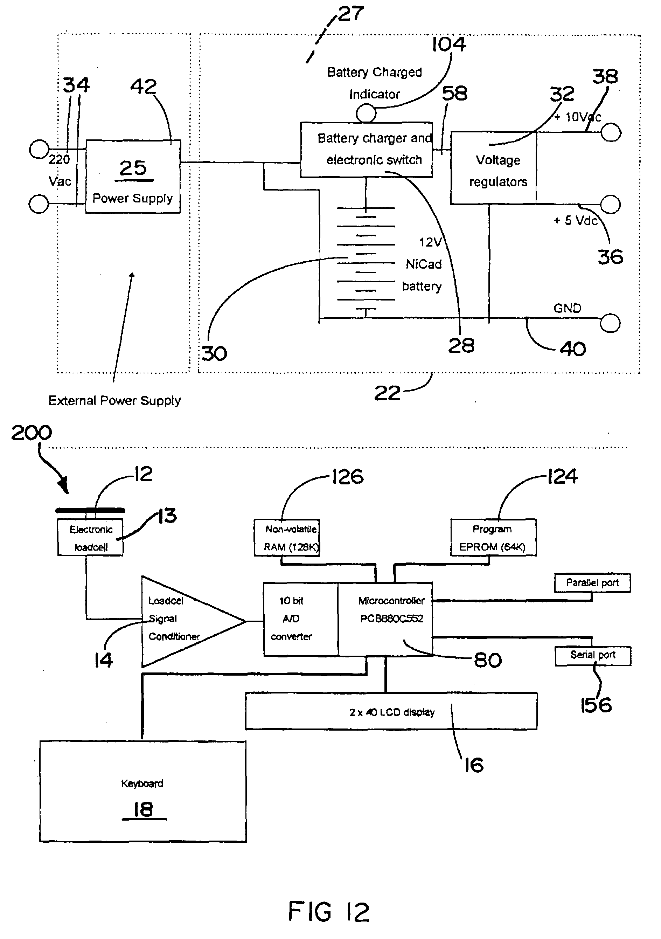

The accessory 200 includes weighing means comprising a platform 12, a loadcell 13 and a loadcell signal conditioner or interface 14 (see Figure 12), a display 16 (see Figures 11 and 12), input means in the form of a hexadecimal keypad 18 (see Figures 11, 12 and 18), and a shaped housing 20 within which are mounted various components of the accessory 200. The housing 20 includes an integral handle to facilitate carrying of the accessory 200.

Referring in particular to Figures 12 to 18 of the drawings, the accessory 200 includes an external power supply 25, a power control circuit 27 (see Figure 12) comprising a battery charger 28, a 12 volt rechargeable NiCad battery pack 30, and voltage regulators 32. The external power supply 25 is connected via lines 34 to a 220 volt AC supply line and provides 12V DC to the power control circuit 27. The power control circuit 27 provides regulated 5 volt and 10 volt DC power via lines 36 and 38, respectively, to various sub-circuits of the accessory 200. A ground line 40 is also connected to the various sub-circuits of the accessory 200.

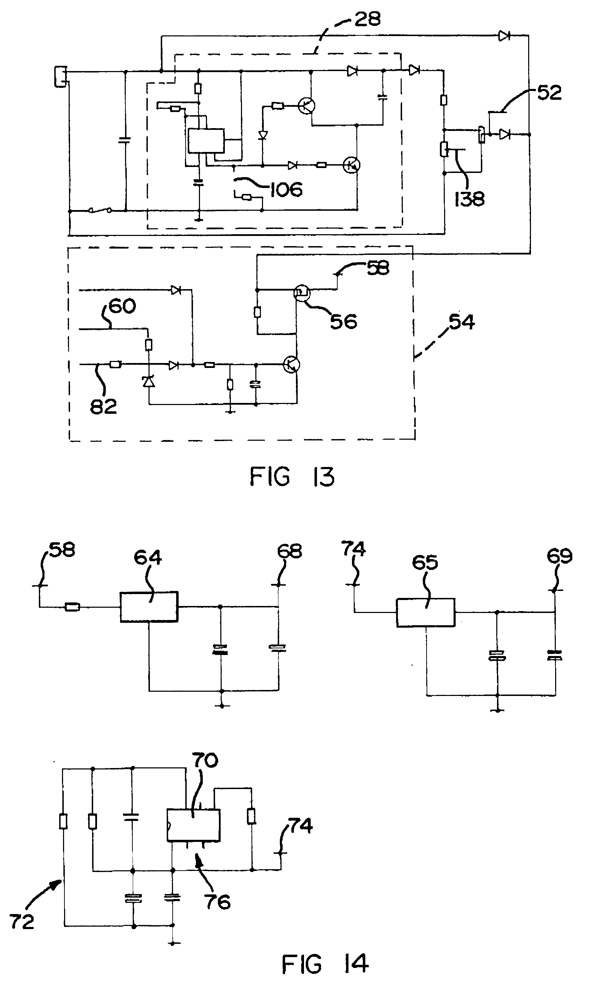

An electronic power switch 54 (see Figure 13) is provided to switch power via a HEXFET 56 to a 12 volt positive supply rail 58 which is connected to 5 volt voltage regulators 64 and 65 (see Figure 14). The electronic power switch 54 is connected via line 60 to an on-off switch 62 (see Figure 18) of the accessory 200.

The voltage regulator 64 is connected to the 12 volt supply rail 58 and provides a 5 volt regulated output which is fed via a 5 volt supply rail 68 to various digital components of the accessory 200. A 10 volt voltage regulator 70 is also connected to the 12 volt supply rail 58. A 10 volt regulated output from the regulator 70 is fed via its associated filter circuitry 72 to a 10 volt supply rail 74 which powers various analog circuits of the accessory 200. The 10 volt regulated output is also fed via lines 76 to the loadcell 13 as an exitation source. The 5V voltage regulator 65 is connected to the 10V supply rail 74 and provides a 5V regulated output which is fed via a 5V supply rail 69 to various analog components of the accessory 200.

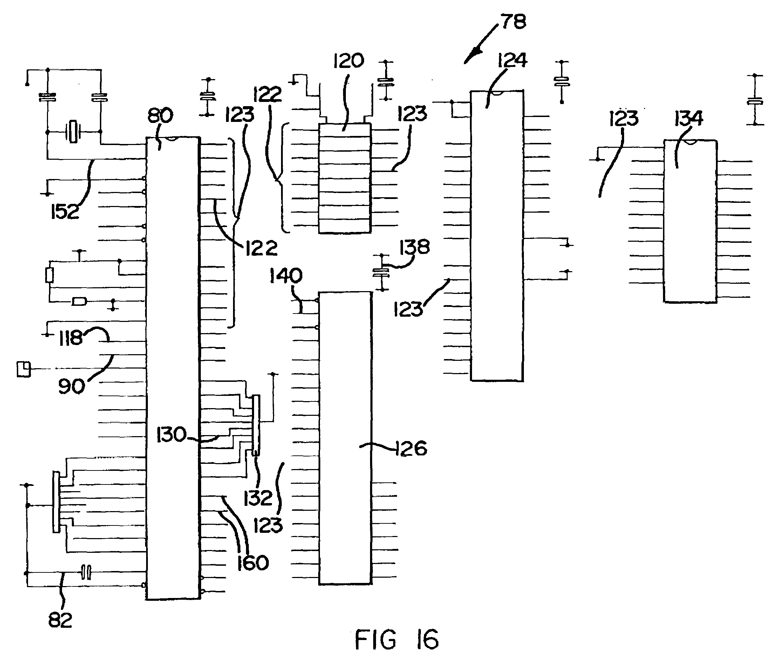

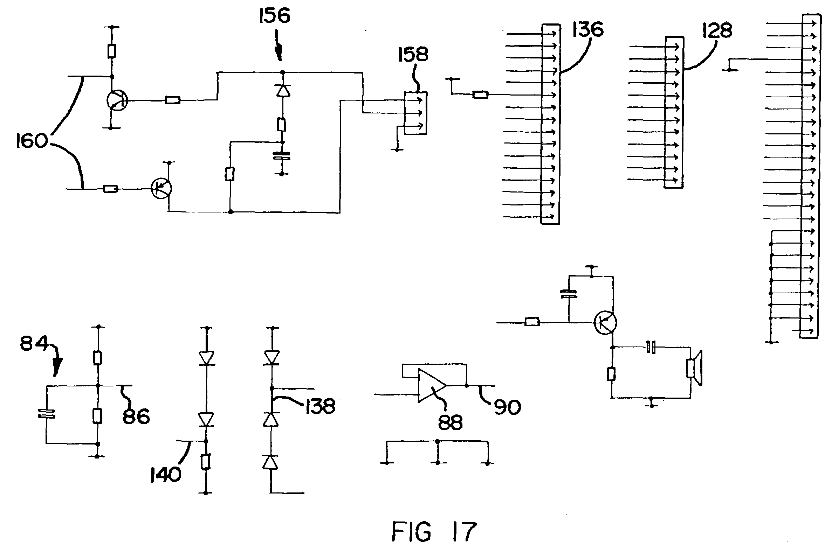

The accessory 200 is controlled by processor circuitry 78 (see Figure 16). The processor circuitry 78 includes a micro-controller 80, typically a PCB80C552, which is connected via line 82 (see Figure 16) to the electronic power switch 54 (see Figure 13) thereby to control switching on and off of the accessory 200. A battery level monitor 84 (see figure 17), including a potential divider, is connected via line 86 to an op-amp 88 (see Figure 17) which operates as a buffer. An output of the op-amp 88 is connected via line 90 to the micro-controller 80 (see Figure 16). Accordingly, the micro-controller 80 is operable to switch the accessory 200 off when the charge level of the battery 30 drops below a preset value set by the battery level monitor 84 (see Figure 17).

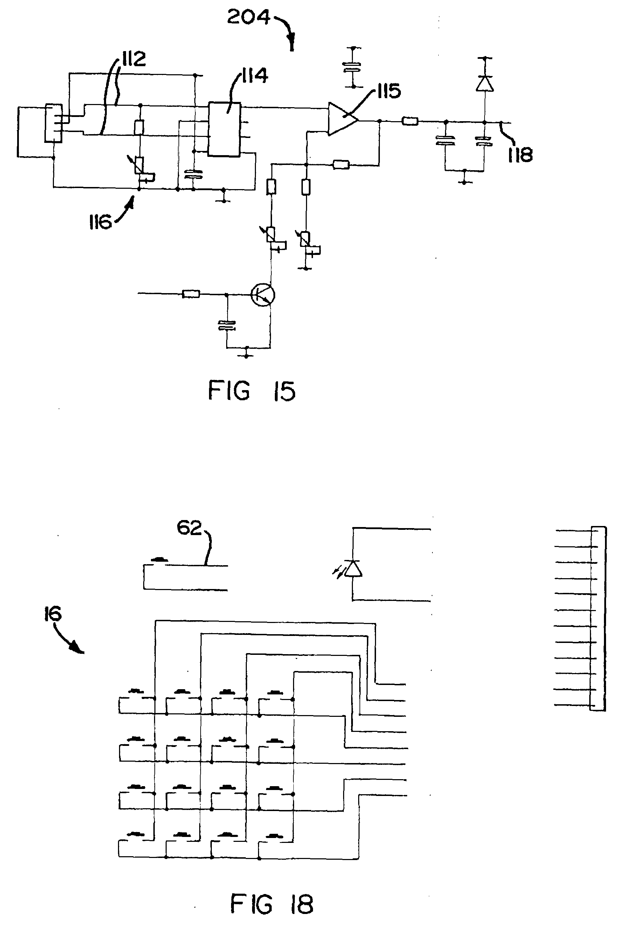

The loadcell 13 of the accessory 200 is connected to the loadcell signal conditioner or interface 14 via lines 112 (see Figure 15). An output from the loadcell is fed into a precision instrumentation amplifier 114 via its associated circuitry 116. A voltage, which is proportional to the combined weight of the bottle and the beverage contained therein located on the platform 12, is amplified by the amplifiers 114 and 115 and fed via line 118 into an analogue-to-digital converter (A/D converter) provided within the micro-controller 80 (see Figure 16).

The processor circuitry 78 (see Figure 16) includes a latch chip 120 which is connected to an address/data bus 122 of the micro-controller 80, a Flash EPROM chip 124, which is also connected to the address/data bus 122, and two static RAM chips 126, also connected to the address/data bus 122. The EPROM chip 124, RAM chips 126, and latch 120 are also connected to an address bus 123.

The keypad 16 (see Figure 18) is a push-button hex keypad and is connected via a connector 128 and lines 130 to the micro-controller 80 and pull-up resistors 132 (see Figure 16). The processor circuitry 78 includes an enabling device 134, typically a GAL22V18 which is connected to the address bus 123 and is programmed selectively to enable the static RAM chips 126 and the Flash EPROM chip 124.

The display 16 is connected via connector 136 to the processor circuitry 78. The display 16 (see Figures 12 and 17) is an LCD display which is operable to display information under control of the processor circuitry 78.

The RAM chips 126 are used to store selected data on a specific alcoholic beverage or stock item and are provided with a continuous supply of current, via a supply line 138 (see Figures 13 and 16), so that their memory is non-volatile. Further, the RAM chips 126 are switched off via line 140 before the micro-controller 80 is switched off.

A serial communication interface 156 (see Figure 17) is connected via connector 158 to an accessory such as a personal computer, a printer, or the like. The serial communication interface 156 is connected via lines 160 to the micro-controller 80 (see Figure 17).

The accessory 200 is used in substantially the identical fashion to the accessory 10 described above with reference to Figures 9 and 10 of the drawings.

The Inventor believes that the invention, as illustrated, provides a relatively simple stocktaking accessory 10, 200 which may be used to monitor the dispensing of alcoholic beverages in a bar, or the like. As each bottle of the alcoholic beverage is merely weighed the Applicants believe that stocktaking is facilitated. This improves control and reduces the risk of pilfering.

In particular, the Inventor believes that, by virtue of the fact that the stock is calculated accurately and automatically simply by weighing the partially full bottles and entering the number of unopened bottles the stocktaking process will be speeded up. Further, as a result of the fact that the stock details are stored automatically in the data storage means of the accessory and can be printed out and/or downloaded onto a personal computer at a convenient time it is no longer necessary to prepare a written record of the stock which further speeds up the stocktaking process.

## Claims

1. A stocktaking accessory for use particularly, though not necessarily exclusively, in taking stock at a location, such as a bar, where beverages are dispensed from receptacles in units of a preselected quantity, characterised in that it includes
weighing means for weighing a partially full receptacle; and
processor means responsive to the weighing means and operable to calculate the quantity of a beverage remaining in the receptacle.

2. A stocktaking accessory as claimed in claim 1, characterised in that it includes data storage means configured to receive from and store data processed by the processor means.

3. A stocktaking accessory as claimed in claim 2, characterised in that the data storage means includes a plurality of storage locations for storing data on at least some of the full receptacle weight, the nett receptacle weight, the full beverage weight, the preselected quantity, the number of dispensable units, the unit price, and the unit weight of each preselected quantity.

4. A stocktaking accessory as claimed in claim 2 or claim 3, characterised in that the data storage means is in the form of volatile and/or non-volatile memory.

5. A stocktaking accessory as claimed in any one of claims 2 to 4, inclusive, characterised in that it includes input means for entering data into the processor means and/or the data storage means.

6. A stocktaking accessory as claimed in any one of the preceding claims, characterised in that it includes display means connected to and responsive to the processor means and operable to display data processed by the processor means.

7. A stocktaking accessory as claimed in any one of the preceding claims characterised in that it is portable and includes a power supply so that it is self-contained.

8. A stocktaking accessory as claimed in any one of the preceding claims, characterised in that the processor means is operable to calculate the unit weight of a beverage by subtracting a nett receptacle weight from a full receptacle weight and then dividing the result by the total number of dispensable units in a full receptacle.

9. A stocktaking accessory as claimed in any one of the preceding claims, characterised in that the processor means is operable to calculate the number of remaining dispensable units, by dividing the weight of the beverage remaining in the receptacle by the unit weight of the beverage.

10. A stocktaking accessory as claimed in claim 9, characterised in that the processor means is operable to multiply the number of remaining dispensable units by a unit price of the beverage to establish a value for the beverage remaining in the receptacle.

11. A stocktaking accessory as claimed in any one of the preceding claims, characterised in that the processor means is a micro-controller.

12. A stocktaking accessory as claimed in any one of the preceding claims, characterised in that the weighing means is a loadcell.

13. A stocktaking accessory as claimed in claim 12, characterised in that it includes an analogue-to-digital converter (A/D converter) connected to, and responsive to, the loadcell and operable to generate a digital output, of the weight of the receptacle and the beverage contained therein, which is fed in use into the processor means.

14. A stocktaking accessory as claimed in any one of the preceding claims, characterised in that it includes a serial and/or parallel data communication interface.

15. A method of monitoring dispensing of beverages dispensed from receptacles characterised in that it includes the steps of
weighing a partially full receptacle; and
feeding a signal from the weighing means to processor means in which the quantity of the beverage remaining in the receptacle is calculated.

16. A method as claimed in claim 15, characterised in that calculating the quantity of beverage remaining in the receptacle includes comparing the partial receptacle weight with a reference weight.

17. A method as claimed in claim 16, characterised in that the reference weight is the weight of an empty receptacle, the method including the prior step of weighing an empty receptacle to establish a nett receptacle weight and storing the nett receptacle weight in a data storage means, comparing the partial receptacle weight with the reference weight by subtracting the nett receptacle weight stored in the data storage means from the partial receptacle weight to calculate the partial beverage weight.

18. A method as claimed in claim 17, which, when the beverage is dispensed in units of a predetermined quantity, is characterised in that it includes dividing the partial beverage weight by the unit weight of the predetermined quantity to obtain the number of dispensable units remaining in the receptacle.

19. A method as claimed in claim 18, characterised in that it includes multiplying the number of dispensable units remaining in the receptacle by a unit price to obtain a value of the beverage remaining in the receptacle.

20. A method as claimed in any one of claims 15 to 19, inclusive, characterised in that it includes automatically storing details cf the quantity of beverage remaining in the receptacle in a data storage means for later retrieval.

21. A stocktaking accessory characterised in that it includes processor means operable to execute the method claimed in any one of claims 15 to 20, inclusive.
